# FASCICULE DE BREVET EUROPEEN

(11) **EP 2 598 394 B1**
(45) Date de publication et mention de la délivrance du brevet: **01.04.2015**
(21) Numéro de dépôt: 11741653.7
(22) Date de dépôt: 11.07.2011
(51) Int. Cl.: B62D 25/20, B60N 2/005

(54) **CHASSIS DE VEHICULE AUTOMOBILE AVEC POUTRE DE SIEGES SURELEVEE**
FAHRZEUGCHASSIS MIT ERHÖHTEM SITZQUERTRÄGER
CAR FRAME WITH HEIGHTENED SEAT CROSS-BEAM

(30) Priorité: 23.07.2010 FR 1056043
(43) Date de publication de la demande: 05.06.2013
(73) Titulaire: Renault s.a.s., 92100 Boulogne-Billancourt (FR)
(72) Inventeur: BISROR, Olivier, F-92350 Le Plessis Robinson (FR); MAUDUIT, Thomas, F-78960 Voisins Le Bretonneux (FR); CAMUS, Guillaume, F-78280 Guyancourt (FR)
(86) Numéro de dépôt international: PCT/FR2011/051644
(87) Numéro de publication internationale: WO 2012/010770

(56) Documents cités:
- EP-A1- 0 619 215
- EP-A2- 1 657 098
- WO-A1-2009/062405
- DE-C1- 4 417 470
- FR-A1- 2 915 452

## Description

L'invention se situe dans le domaine des châssis pour véhicule automobile, notamment des véhicules à propulsion électrique ou hybride. Afin d'assurer une autonomie suffisante aux véhicules à propulsion électrique ou hybride, des batteries d'accumulateur doivent être embarquées. Le volume de ces batteries est sensiblement plus important que celui occupé par un réservoir d'énergie traditionnelle comme par exemple un réservoir d'essence.

Une solution consiste à exploiter un volume délimité sous le siège des passagers, en modifiant le profil du plancher de manière à isoler ce volume de l'habitacle. Le siège des passagers repose alors directement sur une zone surélevée du plancher. La hauteur du siège peut être la même que dans des véhicules de la même gamme construits pour être propulsés par un moteur thermique, ou peut être plus élevée.

La demande de brevet JP 07 156 826 décrit ainsi une structure de châssis selon le préambule de la revendication 1 pour véhicule automobile à propulsion électrique, dans laquelle un volume sous les sièges des passagers avant et arrière est réservé pour la batterie en séparant ce volume de l'habitacle. Des plaques de rehausse verticales sont placées à l'avant et à l'arrière des sièges. Une zone d'assise de plancher surélevée s'étend entre ces plaques de rehausse verticales et des supports de rehausse latéraux fixés aux flancs latéraux de la carrosserie.

Une telle structure n'est pas applicable pour un véhicule à trois portes puisqu'il faut que les sièges des passagers arrière soient bordés par des flancs fixes de carrosserie auxquels les supports de rehausse latéraux sont assemblés. En outre, dans le cas où l'on souhaite décliner un même véhicule dans un modèle à propulsion électrique et dans un modèle à propulsion par moteur thermique, la ligne de points de soudure permettant d'assembler les éléments de plancher aux longerons du véhicule ne peut pas avoir la même géométrie pour le véhicule électrique et pour le véhicule thermique. On est alors obligé de mettre en place, pour la production des deux véhicules, deux lignes de soudage distinctes, ce qui renchérit à la fois les coûts de développement et de production.

La demande de brevet FR 2 915 452 décrit un plancher de véhicule automobile dont une partie arrière est surélevée par rapport à une partie centrale, les deux parties sont reliées entre elles par un support. Le support comprend deux traverses fixées au plancher central ou au châssis du véhicule via deux supports latéraux.

Une telle structure ne concerne pas les véhicules automobiles électriques ou hybrides dont le plancher central est rehaussé par rapport aux planchers de véhicules automobiles thermiques et ne permet pas de transmettre les efforts entre le châssis et une poutre horizontale de réception des sièges.

Enfin, en surélevant le plancher central, on est amené à déplacer les poutres horizontales de réception des sièges. Ces poutres horizontales sont traditionnellement arrimées au plancher central et aux deux flancs latéraux de bavolet, de manière à transmettre les efforts lors d'un choc latéral sur le véhicule. En surélevant le plancher central, on tend donc à rehausser les poutres horizontales qui ne sont alors plus en contact direct avec les flancs latéraux de bavolet, ce qui rend le châssis du véhicule moins rigide.

L'invention a pour but de proposer un châssis pour véhicule électrique ou pour un autre véhicule nécessitant un volume de réservoir d'énergie élevé, qui permette de produire en parallèle des véhicules à propulsion électrique et des véhicules à propulsion par moteur thermique en utilisant un grand nombre de composants et de moyens de production communs.

L'invention a également pour but de proposer un tel châssis présentant une structure rigidifiée et capable de transmettre les efforts lors de chocs latéraux.

Dans un mode de réalisation, l'invention concerne un châssis de véhicule automobile comprenant deux flancs latéraux de bavolet comportant une portion horizontale de fixation d'un plancher central situé entre les deux flancs latéraux de bavolet, au moins une poutre horizontale de réception de sièges montée sur le plancher central surélevé du véhicule et un logement pour un réservoir d'énergie situé sous une surface principale horizontale du plancher central. Les portions horizontales du bavolet et la surface principale du plancher central présentent une différence de hauteur en raison de la présence du logement pour le réservoir d'énergie.

Le châssis de véhicule automobile comprend des éléments de liaison disposés de chaque côté du châssis et comprenant une portion plane fixée au plancher central et une portion inclinée fixée à une extrémité de la poutre horizontale, lesdites portions inclinée et plane étant reliées entre elles et réalisées en une seule pièce pliée, et la fixation de l'élément de liaison respectivement à la poutre horizontale et au plancher central étant faite par soudage.

L'utilisation d'éléments de liaison permet d'assurer la transmission des efforts entre la poutre horizontale de réception des sièges et les flancs latéraux de bavolet. Ainsi, les éléments constituant un châssis pour un véhicule automobile à propulsion thermique peuvent être utilisés sans modification substantielle pour des véhicules à propulsion électrique ou hybride dont le plancher central est rehaussé.

Les éléments de liaison peuvent être réalisés en tôles métalliques pliées, embouties ou soudées.

La portion inclinée peut par exemple se fixer sur la surface interne de la poutre horizontale.

De manière préférentielle, les éléments de liaison comprennent des moyens de rigidification de la jonction entre les portions inclinée et plane, tels que par exemple des nervures.

La portion inclinée peut comprendre au moins une ailette de fixation à la poutre horizontale et de préférence, deux ailettes latérales et une ailette centrale de fixation.

Les ailettes latérales peuvent présenter une découpe arrondie apte à épouser la forme du plancher central du véhicule et la différence de hauteur.

Avantageusement, l'ailette centrale comprend au moins un renfort apte à rigidifier les éléments de liaison.

La portion inclinée peut en outre comprendre un passage pour des câbles électriques.

Avantageusement, chaque élément de liaison est fixé de façon à laisser subsister un écartement entre la portion inclinée et une partie verticale du flanc latéral de bavolet correspondant, de manière à laisser un accès à un dispositif de soudage du châssis sur la carrosserie du véhicule.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue schématique en coupe d'une partie d'un châssis selon l'invention,
- la figure 2 est une vue en perspective d'un des éléments de liaison visibles sur la figure 1, et
- la figure 3 est une vue partielle de dessus en perspective du châssis de la figure 1.

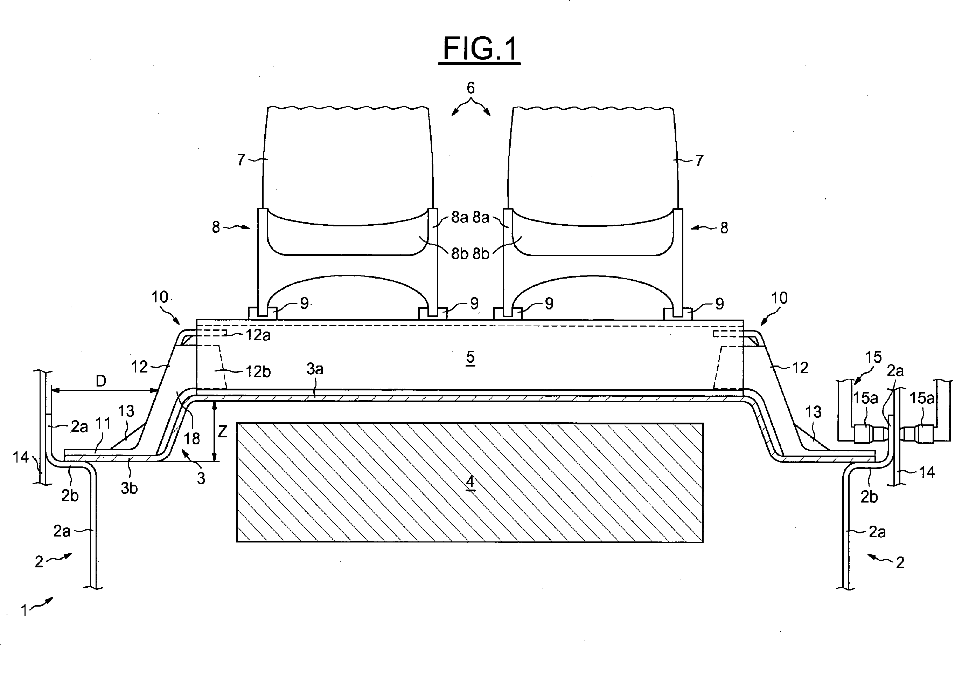

Telle qu'illustrée à la figure 1, une partie d'un châssis 1 est délimitée latéralement par deux flancs latéraux 2 de bavolet. Par « châssis », on entend tout assemblage de type parallélépipédique supportant le moteur, l'habitacle et la carrosserie d'un véhicule. Un flanc latéral de bavolet, ou ridelle, désigne une partie latérale d'un châssis de véhicule automobile destinée à maintenir la charge.

Chaque flanc latéral 2 de bavolet comprend deux parties verticales 2a reliées entre elles par une portion horizontale 2b de fixation du plancher central 3. Les flancs latéraux 2 de bavolet peuvent être réalisés en tôles métalliques pliées ou embouties. Le plancher central 3 comprend une surface principale horizontale 3a et des surfaces latérales horizontales 3b pour la fixation du plancher central 3 sur la portion horizontale 2b des flancs latéraux 2 de bavolet. Les deux surfaces horizontales 3a et 3b présentent une différence de hauteur Z engendrée par l'existence d'un logement ménagé sous le plancher central 3 pour l'implantation de batteries d'accumulateur 4.

Des poutres transversales horizontales 5 sont montées sur la surface principale horizontale 3a du plancher central 3. Chaque poutre horizontale 5 est réalisée en tôle métallique de section creuse en U, de manière à faciliter le passage de divers câbles électriques (non représentés). Ces poutres horizontales 5 permettent en outre la fixation au plancher central 3 de sièges et/ou de banquettes 6. Tel qu'illustré à la figure 1, un siège 6 comprend un dossier 7 et une assise 8 et est monté sur des rails de guidage 9, lesquels sont fixés directement sur une des poutres horizontales 5. L'assise 8 est généralement constituée d'un support 8a réalisé en matériau rigide et d'un coussin 8b intégré au support 8a réalisé en matériau synthétique souple. Dans les véhicules comportant deux rangées de sièges 6, les poutres horizontales 5 sont généralement au nombre de deux.

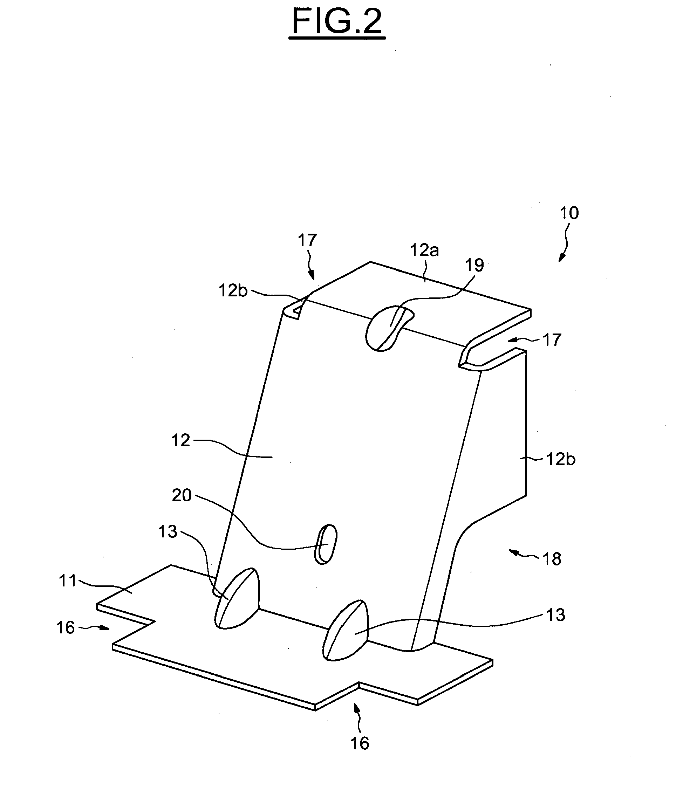

Les poutres horizontales 5 et les flancs latéraux 2 de bavolet sont reliés entre eux par des éléments de liaison 10 disposés de chaque côté du châssis 1. Chaque élément de liaison 10, visible sur la figure 2, comprend une portion plane 11 fixée au plancher central 3 et une portion inclinée 12 fixée à une extrémité d'une poutre transversale horizontale 5. Les deux portions plane 11 et inclinée 12 peuvent être réalisées en une seule pièce pliée ou en deux pièces soudées l'une à l'autre. Toutefois, pour des raisons de rigidité, l'utilisation d'une seule pièce est plus avantageuse. Dans l'exemple illustré, deux nervures de rigidification 13 sont formées au niveau de la jonction des portions plane 11 et inclinée 12 de manière à renforcer d'avantage la rigidité de l'élément de liaison 10.

Chaque poutre transversale horizontale 5 reliée de chaque côté à un élément de liaison 10 joue le rôle d'un absorbeur de chocs, permettant de protéger les occupants en cas de choc latéral en dissipant l'énergie et en répartissant les efforts.

La portion inclinée 12 de chaque élément de liaison 10 est fixée à la surface interne de la poutre horizontale 5 par le biais de trois ailettes 12a, 12b, dont une ailette centrale 12a et deux ailettes latérales 12b visibles sur la figure 2. On notera que l'on pourrait envisager la fixation des ailettes 12a, 12b sur la surface externe de la poutre horizontale 5. Les trois ailettes 12a, 12b sont réalisées par découpage et pliage de la portion inclinée 12 réalisée en tôle métallique. La présence de trois ailettes permet de faciliter la réalisation de cette portion inclinée 12. On notera que l'on pourrait toutefois envisager une portion inclinée 12 comprenant une ailette unique 12a de fixation à la poutre horizontale 5. La fixation de l'élément de liaison 10 respectivement à la poutre horizontale 5 et au plancher central 3 est faite de préférence par soudage.

Une fois le châssis 1 assemblé, les flancs latéraux 2 de bavolet sont soudés à la carrosserie 14 du véhicule. Grâce à l'inclinaison de la portion inclinée 12 de l'élément de liaison 10 et à la position de cet élément de liaison 10 par rapport au flanc latéral 2 de bavolet, un écartement D est laissé entre l'élément de liaison 10 et la partie verticale 2a du flanc latéral 2 de bavolet, de manière à permettre l'insertion d'un dispositif de soudage 15 représenté très schématiquement à la figure 1. Le dispositif de soudage 15 peut être, par exemple, une pince à souder et permet de souder la partie verticale 2a à la carrosserie 14 du véhicule, et ce indifféremment du type de châssis à fabriquer (thermique ou électrique).

Un élément de liaison 10 est détaillé à la figure 2. Tel qu'il est illustré, l'élément de liaison 10 comprend une portion plane 11 de section rectangulaire et une portion inclinée 12 comprenant trois ailettes 12a, 12b de fixation. La portion plane 11, de forme rectangulaire, comprend deux découpes 16. On notera qu'une portion plane 11 comprenant une base rectangulaire ou carrée sans découpe 16 pourrait également être envisagée.

Deux découpes 17 sont réalisées de part et d'autre de l'ailette centrale 12a de manière à permettre le pliage de chacune des deux ailettes latérales 12b. Chacune des ailettes latérales 12b comprend une découpe 18 arrondie de manière à suivre la forme du plancher central 3 et la différence de hauteur Z illustrée à la figure 1.

Les deux nervures de rigidification 13 peuvent être formées par déformation de la tôle vers l'extérieur au niveau de la jonction des portions plane 11 et inclinée 12 de manière à renforcer la rigidité de l'élément de liaison 10. De la même manière un renfort 19 peut être réalisé au niveau de la jonction entre la portion inclinée 12 et l'ailette centrale 12a de manière à rigidifier l'ailette centrale 12a. Le renfort 19 peut être réalisé par déformation de la tôle vers l'intérieur.

Dans l'exemple illustré, la portion inclinée 12 de l'élément de liaison 10 comprend un passage 20 adapté pour recevoir des câbles électriques (non représentés) passant à travers la poutre horizontale 5. Le passage 20 peut avoir la forme d'un trou oblong afin de faciliter le passage de plusieurs câbles. On notera qu'un tel passage 20 pourrait avoir une toute autre forme et servir à fixer un dispositif de fixation de câbles de manière à les fixer le long du plancher central 3.

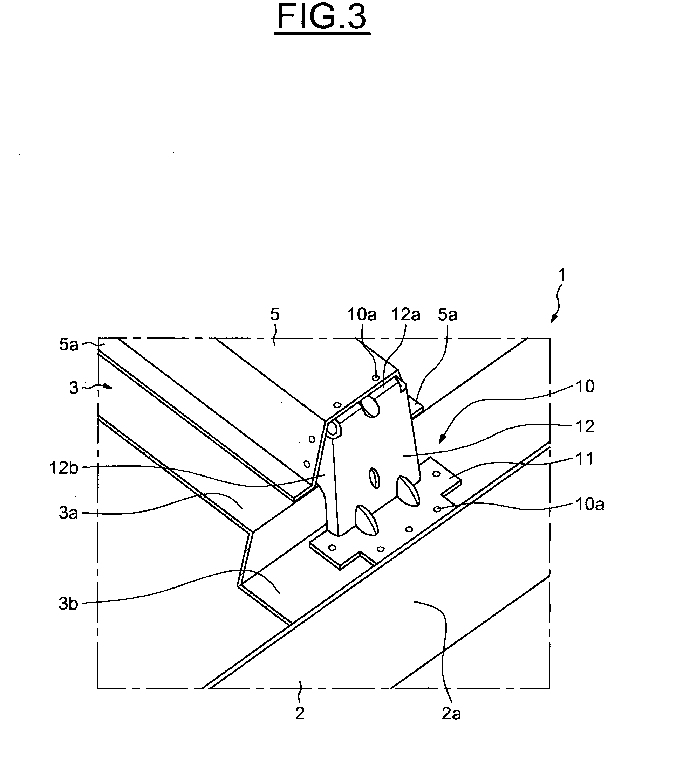

La figure 3 illustre une vue partielle en perspective d'une partie du châssis 1 de la figure 1. La partie de châssis 1 comprend le plancher central 3 fixé au flanc latéral 2 de bavolet.

Telle qu'illustrée à la figure 3, la poutre horizontale 5 comprend un rebord périphérique 5a de chaque coté réalisé par emboutissage de la tôle métallique. Chaque rebord périphérique 5a représente une bande de soudage destinée à être soudée sur le plancher central 3. L'élément de liaison 10 est fixé par des points de soudure 10a par l'intermédiaire des ailettes 12a, 12b sur la poutre horizontale 5 et par l'intermédiaire de la portion plane 11 sur le plancher central 3.

L'assemblage du châssis 1 consiste d'abord à fixer le plancher central 3 sur les flancs latéraux 2 de bavolet. Il convient ensuite de fixer les éléments de liaison 10 sur les poutres transversales horizontales 5, par exemple par soudure, puis de fixer l'ensemble constitué par les poutres horizontales 5 et les éléments de liaison 10 au plancher central 3.

Lorsque les poutres horizontales 5 et les éléments de liaison 10 sont fixés aux flancs latéraux 2 de bavolet par le biais du plancher central 3, les flancs latéraux 2 de bavolet peuvent être fixés à la carrosserie 14 du véhicule avec le dispositif de soudage 15. Le dispositif de soudage 15 peut être constitué par une pince de soudage à deux branches 15a qui viennent se placer de part et d'autre des deux portions de tôle 2a et 14 faisant partie respectivement du châssis 1 et de la carrosserie du véhicule. L'une des pinces 15a est située à l'extérieur de la carrosserie 14. L'autre pince 15a peut passer entre la partie verticale 2a du flanc latéral 2 de bavolet et le ou les éléments de liaison 12 situés du même côté grâce à l'écartement D qui subsiste entre les éléments 12 et la partie verticale 2a.

Grâce à l'invention qui vient d'être décrite, on obtient un excellent transfert des efforts entre le bavolet et la ou les poutres transversales horizontales montées sur le plancher surélevé.

Compte tenu de la position surélevée du plancher, il ne serait pas possible de réaliser une poutre transversale horizontale par emboutissage qui s'étendrait jusqu'au bavolet. L'adjonction de deux éléments de liaison à chaque extrémité de la poutre transversale horizontale permet de résoudre cette difficulté tout en augmentant la rigidité de l'ensemble et en assurant la transmission des efforts en cas de choc latéral.

De plus, les éléments constituant un châssis pour un véhicule automobile à propulsion thermique peuvent être utilisés sans modification substantielle pour des véhicules à propulsion électrique ou hybride dont le plancher central est rehaussé. Ainsi, une même chaîne d'assemblage automatique peut être utilisée pour produire des véhicules à propulsion électrique et des véhicules à propulsion thermique.

## Revendications

1. Châssis (1) de véhicule automobile comprenant deux flancs latéraux (2) de bavolet comportant une portion horizontale (2b) de fixation d'un plancher central surelevé (3) situé entre les deux flancs latéraux (2) de bavolet et comprenant une surface horizontale principale (3a) et des surface latérales horizontales (3b) pour la fixation avec les dites portions horizontales (2b) des flancs latéraux de bavolet (2), au moins une poutre horizontale (5) de réception de sièges (6) montée sur la surface principale horizontale (3a) du plancher central (3) du véhicule, et un logement pour un réservoir d'énergie (4) situé sous ladite surface principale horizontale (3a) du plancher central (3), les portions horizontales (2b) du bavolet (2) et la surface principale (3a) du plancher central (3) présentant une différence de hauteur (Z), **caractérisé en ce qu'**il comprend des éléments de liaison (10) destinés à relier les poutres horizontales (5) et les flancs latéraux (2) de bavolet, disposés de chaque côté du châssis (1) et comprenant une portion plane (11) fixée à une des dites surfaces latérales horizontales (3b) du plancher central (3) et une portion inclinée (12) fixée à une extrémité de la poutre horizontale (5), lesdites portions inclinée (12) et plane (11) étant reliées entre elles et réalisées en une seule pièce pliée, et la fixation de l'élément de liaison (10) respectivement à la poutre horizontale (5) et au plancher central (3) étant faite par soudage.

2. Châssis selon la revendication 1, dans lequel les éléments de liaisons (10) comprennent des moyens de rigidification (13) de la jonction entre les portions inclinée (12) et plane (11).

3. Châssis selon l'une des revendications 1 ou 2, dans lequel la portion inclinée (12) comprend au moins une ailette (12a) de fixation à la poutre horizontale (5).

4. Châssis selon l'une des revendications 1 à 3, dans lequel la portion inclinée (12) comprend deux ailettes latérales (12b) et une ailette centrale (12a) de fixation.

5. Châssis selon la revendication 4, dans lequel les ailettes latérales (12b) présentent une découpe (18) arrondie apte à suivre la forme du plancher central (3) du véhicule et la différence de hauteur (Z).

6. Châssis selon l'une des revendications 4 ou 5, dans lequel l'ailette centrale (12a) comprend au moins un renfort (19) apte à rigidifier l'élément de liaison (10).

7. Châssis selon l'une des revendications 1 à 6, dans lequel la portion inclinée (12) comprend un passage (20) pour des câbles électriques.

8. Châssis selon l'une des revendications 1 à 7, dans lequel chaque élément de liaison (10) est fixé de façon à laisser subsister un écartement (D) entre la portion inclinée (12) et une partie verticale (2a) du flanc latéral (2) de bavolet correspondant.

## Patentansprüche

1. Kraftfahrzeugchassis (1), das zwei Abdeckungsseitenflanken (2) aufweist, die einen horizontalen Abschnitt (2b) zum Befestigen eines zentralen erhöhten Fußbodens (3) aufweisen, der sich zwischen den zwei Abdeckungsseitenflanken (2) befindet und eine horizontale Hauptoberfläche (3a) und horizontale seitliche Oberflächen (3b) zum Befestigten mit den horizontalen Abschnitten (2b) der Abdeckungsseitenflanken (2) aufweist, mindestens einen horizontalen Träger (5) zur Aufnahme von Sitzen (6), die auf der horizontalen Hauptoberfläche (3a) des zentralen Fußbodens (3) des Fahrzeugs montiert sind, und eine Aufnahme für einen Energietank (4), der sich unter der horizontalen Hauptoberfläche (3a) des zentralen Fußbodens (3) befindet, wobei die horizontalen Abschnitte (2b) der Abdeckung (2) und die Hauptoberfläche (3a) des zentralen Fußbodens (3) einen Höhenunterschied (Z) aufweisen, **dadurch gekennzeichnet, dass** es Verbindungselemente (10) aufweist, die dazu bestimmt sind, die horizontalen Träger (5) und die Abdeckungsseitenflanken (2), die auf jeder Seite des Chassis (1) angeordnet sind, zu verbinden, und einen ebenen Abschnitt (11) aufweisen, der an einer der horizontalen seitlichen Oberflächen (3b) des zentralen Fußbodens (3) befestigt ist, und einen schrägen Abschnitt (12), der an einem Ende des horizontalen Trägers (5) befestigt ist, wobei die schrägen Abschnitte (12) und der ebene Abschnitt (11) miteinander verbunden und aus einem einzigen gefalteten Teil hergestellt sind, und die Befestigung des Verbindungselements (10) jeweils an dem horizontalen Träger (5) und an dem zentralen Fußboden (3) durch Schweißen erfolgt.

2. Chassis nach Anspruch 1, bei dem die Verbindungselemente (10) Verstärkungsmittel (13) der Verbindung zwischen dem schrägen (12) und dem ebenen (11) Abschnitt aufweisen.

3. Chassis nach einem der Ansprüche 1 oder 2, bei dem der schräge Abschnitt (12) mindestens eine Rippe (12a) zum Befestigen an dem horizontalen Träger (5) aufweist.

4. Chassis nach einem der Ansprüche 1 bis 3, bei dem der schräge Abschnitt (12) zwei seitliche Befestigungsrippen (12b) und eine zentrale Befestigungsrippe (12a) aufweist.

5. Chassis nach Anspruch 4, bei dem die seitlichen Rippen (12b) einen gerundeten Ausschnitt (18) aufweisen, der geeignet ist, um der Form des zentralen Fußbodens (3) des Fahrzeugs und dem Höhenunterschied (Z) zu folgen.

6. Chassis nach einem der Ansprüche 4 oder 5, bei dem die zentrale Rippe (12a) mindestens eine Verstärkung (19) aufweist, die geeignet ist, um das Verbindungselement (10) zu verstärken.

7. Chassis nach einem der Ansprüche 1 bis 6, bei dem der schräge Abschnitt (12) eine Passage (20) für elektrische Kabel aufweist.

8. Chassis nach einem der Ansprüche 1 bis 7, bei dem jedes Verbindungselement (10) derart befestigt ist, dass ein Abstand (D) zwischen dem schrägen Abschnitt (12) und einem vertikalen Teil (2a) der entsprechenden Abdeckungsseitenflanke (2) verbleibt.

## Claims

1. Motor vehicle chassis (1) comprising two side skirt lateral flanks (2) comprising a horizontal portion (2b) for attachment to a raised central floor (3) situated between the two side skirt lateral flanks (2) and comprising a horizontal main surface (3a) and horizontal lateral surfaces (3b) for fixing to said horizontal portions (2b) of the side skirt lateral flanks (2), at least one horizontal beam (5) on which to mount seats (6) and mounted on the horizontal main surface (3a) of the central floor (3) of the vehicle, and a housing for a reserve of energy (4) situated under said horizontal main surface (3a) of the central floor (3), the horizontal portions (2b) of the side skirt (2) and the main surface (3a) of the central floor (3) exhibiting a height difference (Z), **characterized in that** it comprises connecting elements (10) designed to connect the horizontal beams (5) and the side skirt lateral flanks (2), positioned on each side of the chassis (1) and comprising a flat portion (11) fixed to one of said horizontal lateral surfaces (3b) of the central floor (3) and an inclined portion (12) fixed to one end of the horizontal beam (5), said inclined portion (12) and flat portion (11) being joined together and made as a single bent component, and the connecting element (10) being fixed to the horizontal beam (5) and to the central floor (3) respectively, using welding.

2. Chassis according to Claim 1, **characterized in that** the connecting elements (10) comprise stiffening means (13) for stiffening the junction between the inclined portion (12) and the flat portion (11).

3. Chassis according to either of Claims 1 and 2, in which the inclined portion (12) comprises at least one flange (12a) for fixing to the horizontal beam (5).

4. Chassis according to one of Claims 1 to 3, in which the inclined portion (12) comprises two lateral flanges (12b) and a central fixing flange (12a).

5. Chassis according to Claim 4, in which the lateral flanges (12b) have a rounded cutout (18) able to conform to the shape of the central floor (3) of the vehicle and the height difference (Z).

6. Chassis according to either of Claims 4 and 5, in which the central flange (12a) comprises at least one reinforcer (19) able to stiffen the connecting element (10).

7. Chassis according to one of Claims 1 to 6, in which the inclined portion (12) comprises a passage (20) for electric cables.

8. Chassis according to one of Claims 1 to 7, in which each connecting element (10) is fixed in such a way as to leave a gap (D) between the inclined portion (12) and a vertical part (2a) of the corresponding side skirt lateral flank (2).
